# EUROPÄISCHE PATENTSCHRIFT

(11) **EP 1 276 996 B1**
(45) Veröffentlichungstag und Bekanntmachung des Hinweises auf die Patenterteilung: **27.12.2006**
(21) Anmeldenummer: 01931624.9
(22) Anmeldetag: 19.04.2001
(51) Int. Cl.: F16B 41/00

(54) **MONTAGEEINHEIT AUS EINEM BAUTEIL UND MINDESTENS EINER GEWINDEFORMENDEN SCHRAUBE**
ASSEMBLY UNIT CONSISTING OF A COMPONENT AND AT LEAST ONE THREAD MOULDING SCREW
UNITE DE MONTAGE CONSTITUEE D'UN COMPOSANT ET D'AU MOINS UNE VIS TARAUDEUSE

(30) Priorität: 25.04.2000 DE 10020218
(43) Veröffentlichungstag der Anmeldung: 22.01.2003
(73) Patentinhaber: Kamax-Werke Rudolf Kellermann GmbH & Co. KG, 37520 Osterode am Harz (DE)
(72) Erfinder: HARTMANN, Gunther, 36304 Alsfeld (DE); SOMMER, Wolfgang, 35285 Gemünden/Wohra (DE); WAGNER, Frank, 35418 Gro en-Buseck (DE)
(74) Vertreter: Rehberg Hüppe + Partner
(86) Internationale Anmeldenummer: PCT/EP2001/004438
(87) Internationale Veröffentlichungsnummer: WO 2001/081777

(56) Entgegenhaltungen:
- DE-A- 3 208 643
- DE-U- 8 631 650
- FR-A- 730 845
- FR-A- 2 743 122
- GB-A- 881 155
- US-A- 4 797 045

## Beschreibung

Die Erfindung betrifft eine Montageeinheit aus einem Bauteil und mindestens einer gewindeformenden Schraube, wobei das Bauteil für jede Schraube je ein Durchgangsloch aufweist und jede Schraube einen der Betätigung dienenden Kopf mit einer dem Bauteil zugekehrten Auflagefläche und einen teilweise mit einem Gewinde versehenen Schaft besitzt. In der Montagetechnik werden in vermehrtem Ausmaß Montageeinheiten verlangt, bei denen mehrere Bestandteile in einer vormontierten Einheit bereits zusammengefügt sind. Die Montageeinheit aus einem Bauteil und meist mehreren Schrauben wird dann mit einem Werkstück verbunden. Ein typisches Beispiel für diese Technik ist ein Oberteil und ein Unterteil, die miteinander durch eine oder mehrere Schrauben verschraubt werden müssen. Dabei wird aus dem Oberteil als Bauteil und den meist mehreren Schrauben eine vormontierte Montageeinheit geschaffen, an der die Schrauben unverlierbar gehalten sind. Diese Montageeinheit wird dann mit dem Unterteil als Werkstück verschraubt, wobei die Schrauben entweder nacheinander oder gleichzeitig angezogen werden können, insbesondere unter Einsatz eines mehrspindligen automatischen Schraubers. Typische Einsatzfälle für solche Montageeinheiten werden im Automobilbau benötigt. Dabei bildet beispielsweise der Zylinderkopfdeckel oder ein Deckel eines Getriebes das Bauteil, welches mit den Schrauben mit dem Werkstück, also dem Zylinderblock bzw. dem Getriebegehäuse, verschraubt wird. Durch die Schaffung solcher Montageeinheiten wird ein möglichst hoher Grad der Vorfertigung erreicht. Die Schrauben befinden sich bereits in ausgerichtetem Zustand an dem Bauteil verliersicher vormontiert. Sie sind während des Transportes vor Beschädigung weitgehend geschützt und erlauben die schnelle Verbindung mit dem Werkstück.

Eine Montageeinheit der eingangs beschriebenen Art ist aus der PCT-Anmeldung mit der internationalen Veröffentlichungsnummer WO 95/21335 bekannt. Die dortige Montageeinheit weist ein Bauteil, also beispielsweise einen Gehäusedeckel, sowie mindestens ein Fixierteil in Form einer Schraube auf. Zu jeder Schraube gehört jedoch noch ein drittes Teil, nämlich eine als Verliersicherung eingesetzte Hülse. Die Hülse besteht aus Metall, insbesondere aus Blech. Sie verteuert die Herstellkosten der Montageeinheit. Die Hülse wird in ein entsprechendes Durchgangsloch an dem Bauteil eingepresst, wozu ein gesonderter Vormontageschritt erforderlich ist. Auch die Schraube weist eine entsprechend komplizierte Formgebung auf. Im Bereich des Schaftes der Schraube ist ein Ringflansch mit beiderseits sich anschließenden Ringrillen vorgesehen, der gesondert zu dem Gewinde am Schaft der Schraube hergestellt werden muss. Die Dimensionierung des Ringflansches ist auf die Dimensionierung eines Halskragens an der Hülse abgestimmt, so dass auf diese Art und Weise eine Axialsperre gebildet wird, die aber eine entsprechende axiale Beweglichkeit in einem Bewegungsbereich eröffnet, so dass in der vormontierten Stellung die Schrauben zwar verliersicher, jedoch nicht fest an dem Bauteil gehalten sind. Es besteht auch die Möglichkeit, auf die Ausbildung eines Ringflansches an der Schraube zu verzichten. In diesem Falle müssen besondere Elemente an der Hülse ausgebildet werden, die in Verbindung mit der Schraube eine Axialsperre ergeben. Damit wird die Hülse wieder komplizierter und aufwendiger in ihrer Formgebung. In diesem Falle kann das Gewinde der Schraube einen Bestandteil der Axialsperre übernehmen. Zwischen dem Durchmesser des Durchgangsloches im Bauteil und dem Durchmesser des Schaftes der Schraube besteht eine Relation nur insofern, als die Schraube mitsamt der Hülse durch dieses Durchgangsloch hindurchtreten bzw. in dieses Durchgangsloch eingesetzt werden muss. Dennoch findet eine genaue axiale Ausrichtung der Schraube an dem Bauteil nicht statt, weil die Schraube begrenzt beweglich gehalten ist. Dies kann für den Einschraubvorgang der Schraube im Werkstück einen Vorteil bedeuten, wenn sichergestellt ist, dass die Schraube zentrierend den Eingang in das Gewinde im Werkstück findet. Durch die Möglichkeit der Achsverkippung der Schrauben gegeneinander ist jedoch das Eintreten der freien Schaftenden in die Gewinde im Werkstück nur bedingt zu erreichen. Diesen Nachteilen kann man dadurch entgegenwirken, dass die Hülse als drittes Bauteil innerhalb der Montageeinheit eine relativ große axiale Länge aufweist, insbesondere erheblich länger ausgebildet ist als die Wandstärke des Bauteils. Durch die Länge der Hülse muss auch die Länge der Schraube vergrößert werden, was nicht nur einen zusätzlichen Kostenaufwand bedeutet, sondern auch in manchen Fällen die Funktion nachteilig beeinflusst. Der grundsätzliche Einsatz solcher Hülsen, also bei Montageeinheiten aus mindestens drei einzelnen Elementen, ist insofern nachteilig, als die Hülse beim Überschrauben der Schraube in das Werkstück mitverspannt wird. Wenn dann noch Hülsen aus vergleichsweise dünnem deformierbaren Blech eingesetzt werden, so besteht die Gefahr unterschiedlicher Verformungen der Hülsen beim Anziehen der Schrauben, so dass die Aufbringung einer reproduzierbaren Vorspannkraft nur bedingt möglich ist.

Die DE 196 51 838 A1 zeigt ein aus Kunststoff bestehendes Bauteil, welches unter Zwischenschaltung einer Dichtung mit einem Werkstück zu verschrauben ist. Auch hier findet eine Hülse Verwendung, die das Bauteil durchsetzt und die mit der Dichtung verbunden ist. Auch hier muss die Schraube einen gesondert herzustellenden Ringflansch aufweisen, der mit der Hülse im Sinne einer Axialsperre zusammenwirkt. Auf diese Weise ist die Schraube lose, aber verliersicher an der Hülse gehalten. Die zusätzlich zu dem Bauteil und der Schraube eingesetzte Hülse als drittes Element der Montageeinheit muss sich jedoch nicht unbedingt durch das gesamte Durchgangsloch im Bauteil hindurch erstrecken. So zeigt die DE 195 46 072 C2 eine axial verkürzte Hülse mit einem konischen Kragen, der nur teilweise unter Reibklemmung in ein entsprechend teilweise konisch gestaltetes Durchgangsloch im Bauteil eingreift. Die Unverlierbarkeit wird hier durch Reibkräfte erbracht, so dass eine entsprechend hohe Unsicherheit resultiert. Auch dabei gelangt letztendlich die scheibenartig ausgebildete Hülse zwischen die Auflagefläche am Kopf der Schraube und der entsprechenden Gegenfläche am Bauteil. Die Hülse wird also auch hier einklemmt, und es bestehen grundsätzlich ähnliche Nachteile, wie oben beschrieben.

Aus der FR-A-2 743 122 ist eine Montageeinheit aus einem Bauteil und mehreren Befestigungsschrauben bekannt. Das Bauteil weist auch hier ein Gehäuse aus Kunststoff auf, welches Arme besitzt, mit deren Hilfe das Bauteil auf einen Träger aufschraubbar ist. An jedem Arm ist an jeder Schraubstelle je eine in Richtung auf den Träger vorstehende Hülse angeformt. Die Hülse besitzt einen über den Großteil ihrer Länge durchgehenden Innendurchmesser, der im Rahmen der Fertigungsgenauigkeiten gleich dem Außendurchmesser der Befestigungsschraube gewählt ist, so dass die Befestigungsschraube auf diese Weise mit ihrer Achse ausgerichtet gehalten ist. Die den Innendurchmesser der Hülse bildende Bohrung besitzt eine Einschnürung geringer axialer Länge, die kleiner als die Ganghöhe des Gewindes der Befestigungsschraube ausgebildet ist. Die Einschnürung besitzt einen gegenüber dem Innendurchmesser reduzierten Durchmesser, der größer als der Kerndurchmesser und kleiner als der Außendurchmesser des Gewindes der Befestigungsschraube gewählt ist. Die Befestigungsschraube ist in die Einschnürung der Hülse eingeschraubt, so dass die Befestigungsschraube an der Hülse des Bauteils der Montageeinheit festgelegt ist. Beim Aufschrauben der Montageeinheit auf den Träger kann die Einschnürung zerstört werden.

Weiterhin sind vormontierte Montageeinheiten bekannt, die ebenfalls aus mindestens drei Elementen aufgebaut sind und bei denen die zuvor beschriebene Hülse durch einen Clip, eine Halteklammer o. dgl. ersetzt ist. Auch hierbei bedeutet das dritte Element einen zusätzlichen Aufwand, der sich zudem oft nicht vorteilhaft auf die Funktion auswirkt.

Der Erfindung liegt die Aufgabe zugrunde, eine vormontierbare bzw. vormontierte Montageeinheit aufzuzeigen, die ohne Verwendung eines dritten Elementes in Form einer Hülse, Klammer o. dgl. auskommt und bei der die Schraube bzw. die Schrauben in der vormontierten Stellung unverlierbar und fest an dem Bauteil gehalten sind.

Erfindungsgemäß wird dies durch eine Montageeinheit mit den Merkmalen des Anspruchs 1 erreicht.

Die Erfindung baut auf der Idee auf, an der Montageeinheit eine oder mehrere gewindeformende Schrauben einzusetzen. Unter einer solchen gewindeformenden Schraube wird eine Schraube verstanden, die beim Eindrehen ein Gewinde spanlos formt. Zuweilen werden solche Schrauben auch als gewindefurchende Schrauben bezeichnet. Es wird eine abgestimmte Relation zwischen dem Durchmesser des Durchgangsloches im Bauteil und der Dimensionierung der Schraube, insbesondere in ihrem mit Gewinde versehenen Schaftabschnitt, hergestellt, so dass bei der Vormontage die Schraube gewindeformend das Durchgangsloch durchsetzt bzw. in dieses eingreift. Damit wird nicht nur die Axialsperre geschaffen, sondern auch eine feststehende Achsausrichtung der Schraube relativ zum Bauteil erreicht. Die Ausrichtung der Achse der Schraube ist damit festgelegt, und die Schraube kann nicht mehr verkippen. Wenn die Schraube nur in das Durchgangsloch einreicht, liegt das Gewinde der Schraube teilweise im Bereich des Durchgangsloches und teilweise auf der dem Kopf zugekehrten Seite der Schraube außerhalb des Durchgangsloches. Das Gewinde ist damit während des Transportes vom Hersteller der vormontierten Montageeinheit bis zum Verarbeiter in geschützter Stellung, so dass Beschädigungen nicht zu erwarten sind. Trotz dieser insoweit verbesserten Funktion der achsausgerichteten festen Stellung, in der auch die Unverlierbarkeit erbracht ist, entfällt die Anwendung des dritten Bauteils, nämlich einer Hülse, einer Klammer o. dgl., wodurch sich der Herstellungsaufwand entsprechend verringert. Der Aufwand wird weiter dadurch verringert, dass selbstformende Schrauben eingesetzt werden können, deren Gewinde auch zur Ausbildung der Axialsperre herangezogen wird. Damit entfällt die gesonderte Anordnung eines Ringflansches an dem Schaft der Schraube.

Insbesondere dann, wenn das Bauteil mehrere solcher Schrauben in der vormontierten Stellung aufweisen muss, so dass es für eine Mehrfachverschraubung mit dem Werkstück ausgebildet ist, ist es von Bedeutung, dass die Schraube im Bereich des Schaftes zwischen der Auflagefläche am Kopf und dem Gewindeabschnitt eine einen Hinterschnitt bildende Ringnut aufweist, deren Durchmesser kleiner als der Kerndurchmesser des Gewindes und deren axiale Länge unter Berücksichtigung der entsprechenden Übergangsradien größer als die axiale Länge des Durchgangsloches im Bauteil ist. Durch die Ausbildung der gewindeformenden Schraube wird in der vormontierten Einheit einerseits die Axialsperre und die Achsausrichtung sowie die Unverlierbarkeit der montierten Montageeinheit erreicht. Andererseits kommt die Schraube bzw. die Schrauben im Bereich der den Hinterschnitt bildenden Ringnut von dem gefurchten Gewinde im Bauteil radial und axial frei, so dass unter Berücksichtigung der Toleranzen eine Anpassung der Schraube oder der Schrauben an dem Werkstück möglich wird. Sobald die Schraube mit ihrem Gewinde aus dem gefurchten Gewinde im Durchgangsloch des Bauteils ausgetreten ist, kann sich das Bauteil im begrenztem Maß axial und/oder radial gegenüber dem Werkstück bewegen bzw. anpassen. Durch weiteres Anziehen der Schraube wird die Vorspannkraft aufgebracht. Beim Einsatz mehrerer Schrauben wird eine anfänglich mögliche Verspannung des Bauteils am Werkstück durch die Schrauben beim Austritt der Gewinde der Schrauben aus dem Bauteil freigegeben, so dass das Bauteil in eine zwangsfreie Relativlage zu dem Werkstück gelangt. Von dieser Anpassung kann dann Gebrauch gemacht werden, wenn die Schrauben nacheinander in das Werkstück eingeschraubt werden. Gleiches gilt auch für das gleichzeitige Überschrauben mehrerer oder aller Schrauben in das Werkstück. In letzterem Falle ist es besonders vorteilhaft, wenn die Bohrungen im Werkstück, in die die Schrauben eingreifen, nicht mit Gewinde versehen werden, sondern lediglich als vorgegossene oder spanend bearbeitete Bohrungen ausgebildet sind. Man spart dabei einerseits den Herstellungsschritt von Gewinden im Werkstück ein und nutzt ein zweites Mal die gewindeformende Eigenschaft der Schraube aus. Ein gegenseitiges Verspannen des Bauteils im Verhältnis mehrerer Schrauben zueinander wird vermieden, weil sich jede Schraube ihr eigenes Gewinde in der Bohrung im Werkstück beim Eindringen in die Bohrung selbst bildet. So wird den relativen Winkellagen der Gewinde der Schrauben beim Einschraubvorgang zueinander automatisch Rechnung getragen. Bei Einhaltung entsprechender Toleranzen ist es aber auch möglich, die vormontierte Montageeinheit aus Bauteil und Schrauben mit einem Werkstück zu verbinden, in dessen den Schrauben zugeordneten Bohrungen auch bereits Gewinde enthalten sind. Dies gilt sowohl für das gleichzeitige Überschrauben mehrerer Schrauben in ein Werkstück als auch das Überschrauben mehrerer Schrauben nacheinander.

Das Gewinde an jeder Schraube kann auf der dem Kopf abgekehrten Seite einen Ansatzbereich aufweisen, in welchem der Außendurchmesser des Gewindes kleiner als der Durchmesser des Durchgangsloches im Bauteil ausgebildet ist. Diese gegenseitige Abstimmung ist derart zueinander getroffen, dass einerseits die Schraube mit dem Ansatzbereich in das Durchgangsloch eingefädelt werden kann und andererseits dennoch beim Einschrauben in das Bauteil die gewindeformende Funktion des Gewindes der Schraube benutzt wird. So kann das Gewinde an jeder Schraube einen Ansatzbereich, einen Furchbereich und einen Glättbereich aufweisen, wobei die axiale Länge des Ansatzbereichs und des Furchbereichs gleich oder kleiner als die axiale Länge des Durchgangsloches im Bauteil ausgebildet ist. In diesem Falle besteht die Möglichkeit, dass in der vormontierten Stellung jede Schraube nicht oder nur geringfügig über das Durchgangsloch vorsteht. Diese Ausbildung kann dann von Vorteil sein, wenn eine besonders hohe Sicherheit gegen Beschädigung des Gewindes der Schraube erzielt werden muss und eine Zentrierfunktion der freien Enden der Schrauben bei der Verbindung mit dem Werkstück von untergeordneter Bedeutung ist.

Andererseits besteht aber auch die Möglichkeit, dass das Gewinde an jeder Schraube einen Ansatzbereich, einen Furchbereich und einen Glättbereich aufweist, wobei die axiale Länge des Ansatzbereichs und des Furchbereichs größer als die axiale Länge des Durchgangsloches im Bauteil ausgebildet ist. In diesem Falle wird die Zentrierfunktion begünstigt.

In allen Fällen kann der Schaft der Schraube im Bereich des Gewindes einen trilobularen Querschnitt aufweisen. Ein solcher trilobularer Querschnitt stellt ein so genanntes Gleichdick dar, d. h. an allen Stellen über den Umfang des Querschnittes ergibt sich bei der Durchmesserbestimmung mit 180° Versatz das gleiche Maß, obwohl der Querschnitt etwa dreieckige oder plektronartige Gestalt besitzt. Ein solcher trilobularer Querschnitt erfüllt auch die Funktion einer Selbstzentrierung und ermöglicht zum anderen das Formen bzw. Furchen des Gewindes im Bauteil und ggf. zusätzlich im Werkstück.

Besonders vorteilhaft ist es, wenn das Durchgangsloch im Bauteil einen Durchmesser aufweist, der größer als der Flankendurchmesser und kleiner als 90 % des Außendurchmessers des Gewindes am Schaft der Schraube ausgebildet ist. Der Durchmesser des Durchgangsloches liegt also in dem zwischen den beiden Grenzen aufgespannten Bereich. Bei Einhaltung dieser Grenzen ist einerseits der Widerstand beim Formen des Gewindes noch hinreichend klein genug. Im anderen Falle entsteht ein derart schwach ausgebildetes und geformtes Gewinde, dass die Schraube in diesem geformten Gewinde nicht einwandfrei gehalten werden kann. Bei Einhaltung der aufgezeigten Grenzen kann die erforderliche Vorspannkraft nach dem Überschrauben ordnungsgemäß und reproduzierbar aufgebracht werden.

Das Durchgangsloch kann zum Beispiel an dem Rand eines deckelartigen Bauteils verwirklicht werden, der mit seiner Anlagefläche an dem Werkstück direkt oder unter Zwischenschaltung einer Dichtung oder eines anderen Elementes zur Anlage kommt. Es ist aber auch möglich, dass das Bauteil für einen Zusammenbau mit einem Werkstück eine Anlagefläche aufweist, und dass das Durchgangsloch im Bauteil gegenüber der Anlagefläche axial rückversetzt angeordnet ist. Insbesondere bei dünnwandigen Bauteilen ist es möglich, eine im Querschnitt etwa hutartige Vertiefung zu formen, insbesondere tiefzuziehen, die in Verbindungsrichtung mit dem Werkstück rückversetzt angeordnet ist, so dass die Schraube in der vormontierten Stellung noch mehr geschützt untergebracht ist. Da die Schraube häufig aus einem Werkstoff höherer Festigkeit als das Werkstück besteht, ist die Gefahr gering, die Oberfläche des Werkstücks zu beschädigen. Sicherlich wird bei dieser Ausführungsform die Länge der Schraube vergrößert. Für manche Anwendungsfälle ist dies jedoch wünschenswert, insbesondere dann, wenn die Schraube einen Dehnabschnitt entsprechender axialer Länge aufweisen soll oder muss.

Der Ansatzbereich des Gewindes an jeder Schraube kann am freien Ende des Schaftes der Schraube vorgesehen sein bzw. beginnen. Andererseits ist es jedoch auch möglich, dass die Schraube am freien Ende ihres Schaftes einen gewindefreien Zentrieransatz aufweist. Ein solcher Zentrieransatz schützt einerseits das Gewinde gegen ungewollte Beschädigung und erleichtert andererseits eine Zentrierung des Bauteils über die Schrauben am Werkstück.

Die Erfindung wird anhand bevorzugter Ausführungsbeispiele weiter erläutert und beschrieben.
Es zeigen:
- Fig. 1: eine Schnittdarstellung einer ersten Ausführungsform der Montageeinheit vor dem Ansetzen an einem Werkstück,
- Fig. 2: eine weitere Ausführungsform eines Teilbereiches der Montageeinheit,
- Fig. 3: eine dritte Ausführungsform der Montageeinheit und
- Fig. 4: eine vierte Ausführungsform der Montageeinheit.

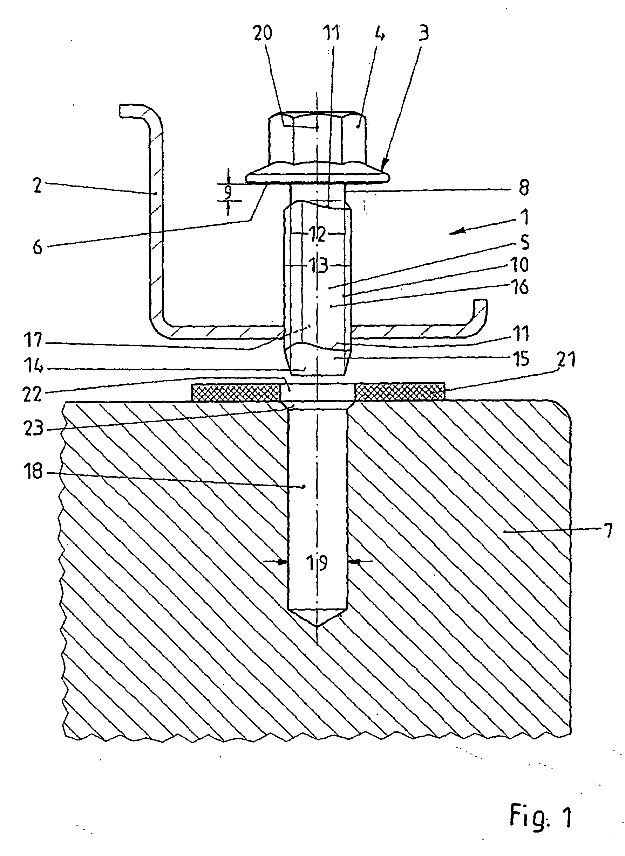

In Fig. 1 ist eine Montageeinheit 1 mit einem der Erläuterung dienenden Teilbereich dargestellt. Die Montageeinheit 1 besteht aus einem Bauteil 2 und mindestens einer Schraube 3. In den Zeichnungen ist generell jeweils nur eine Schraube 3 in Verbindung mit einem Bauteil 2 dargestellt. Es versteht sich, dass an einem Bauteil 2 insbesondere auch mehrere Schrauben in entsprechendem Abstand voneinander vorgesehen sein können.

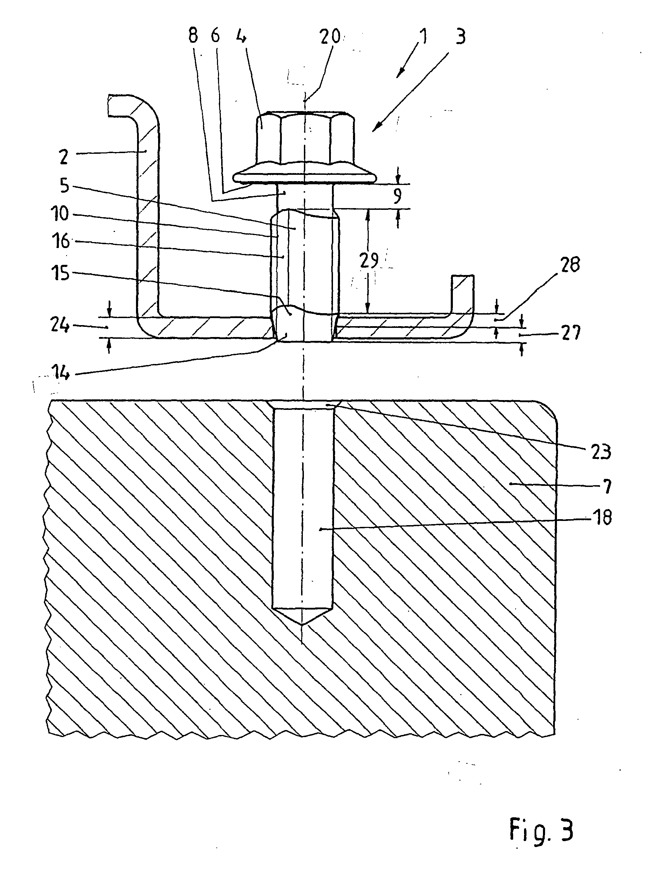

Die Schraube 3 weist einen Kopf 4, der in bekannter Weise zum Ansatz eines Verdrehwerkzeuges ausgebildet ist, und einen Schaft 5 auf. Der Kopf 4 besitzt am Übergang zum Schaft 5 eine Auflagefläche 6, die letztlich bei der Montage der Montageeinheit 1 an einem Werkstück 7 an dem Bauteil 2 zur Anlage kommt. Der Schaft 5 jeder Schraube 3 weist ausgehend vom Kopf 4 bzw. der Auflagefläche 6 eine Ringnut 8 auf, die sich über eine axiale Länge 9 des Schaftes 5 erstreckt. An die Ringnut 8 schließt ein Gewinde 10 an, welches sich mehr oder weniger über die gesamte Länge des Schaftes 5 im Anschluss an die Ringnut 8 erstreckt. Der Schaft 5 besitzt im Bereich des Gewindes 10 des Schaftes 5 einen trilobularen Querschnitt 11, der durch eine geschwungene Linienführung angedeutet ist. Das Gewinde 10 am Schaft 5 weist einen Kerndurchmesser 12 und einen Außendurchmesser 13 auf. Der Flankendurchmesser des Gewindes 10 wird nach der bekannten Formel bestimmt. Am freien Ende des Schaftes 5 ist ein konisch ausgebildeter Ansatzbereich 14 vorgesehen. Über die Länge des Schaftes 5 der Schraube 3 schließt sich in Richtung auf den Kopf 4 an den Ansatzbereich 14 ein Furchbereich 15 und ein Glättbereich 16 an. Die jeweilige axiale Erstreckung dieser Bereiche 14, 15, 16 wird im Zusammenhang mit der Ausführungsform gemäß Fig. 3 näher erläutert.

In dem Bauteil 2 ist an der dafür vorgesehenen Stelle ein Durchgangsloch 17 vorgesehen, welches zunächst als durchgehende Bohrung in das Bauteil 2 eingebracht worden ist. Es versteht sich, dass das Bauteil 2 an den dafür vorgesehenen Stellen für jede Schraube 3 ein solches Durchgangsloch 17 aufweist. Dieses Durchgangsloch 17 besitzt nach seiner Einbringung einen Durchmesser, der etwa dem Durchmesser 19 einer in das Werkstück 7 an der betreffenden Stelle eingebrachten Bohrung 18 entspricht. Der Durchmesser des Durchgangsloches 17 in dem Bauteil 2 ist größer als der Kerndurchmesser 12 der Schraube 3 und kleiner als der Außendurchmesser 13. Bei der Erstellung der Montageeinheit aus dem Bauteil 2 und der darin eingesetzten Schraube 3 wird die Schraube mit ihrem Ansatzbereich 14 zunächst in das Durchgangsloch 17 eingeführt, wobei die entsprechende Zentrierwirkung ausgenutzt wird. Sobald die Zentrierung erfolgt ist und aufgrund des trilobularen Querschnittes 11 ein dreifacher Kontakt mit der Wandung des Durchgangsloches 17 eingetreten ist, wird die Schraube 3 weiter in das Durchgangsloch 17 eingeschraubt, wobei sie ihre gewindeformende Funktion erfüllt und der Furchbereich 15 einwirkt. Das feste Einsetzen der Schraube 3 an dem Bauteil 2 kann im Bereich des Furchbereiches 15 oder auch im Glättbereich 16 beendet werden, wobei die Teile dann eine Relativlage einnehmen, wie sie in Fig. 1 dargestellt ist. Damit wurde die gewindeformende Eigenschaft der Schraube 3 erstmalig, d. h. in Verbindung mit dem Bauteil 2, ausgenutzt. In dieser vormontierten Stellung ist die Schraube 3 an dem Bauteil 2 nicht nur verliersicher gehalten, sondern mit ihrer Achse 20 auch ausgerichtet fest fixiert.

Bei dem Werkstück 7 kann es sich beispielsweise um ein Unterteil, einen Getriebekasten o. dgl. handeln. Das Bauteil 2 kann ein Oberteil, ein Gehäusedeckel o. dgl. sein. Bei der Montage der Montageeinheit 1 an dem Werkstück 7 kann es erforderlich oder sinnvoll sein, eine Dichtung 21 einzufügen, die ihrerseits eine entsprechend bemessene Durchbrechung 22 aufweist. Die Bohrung 18 im Werkstück 7 ist zweckmäßig mit einer Fase 23 versehen, die dem erleichterten Einführen des Ansatzbereiches 14 des Schaftes 5 der Schraube 3 dient.

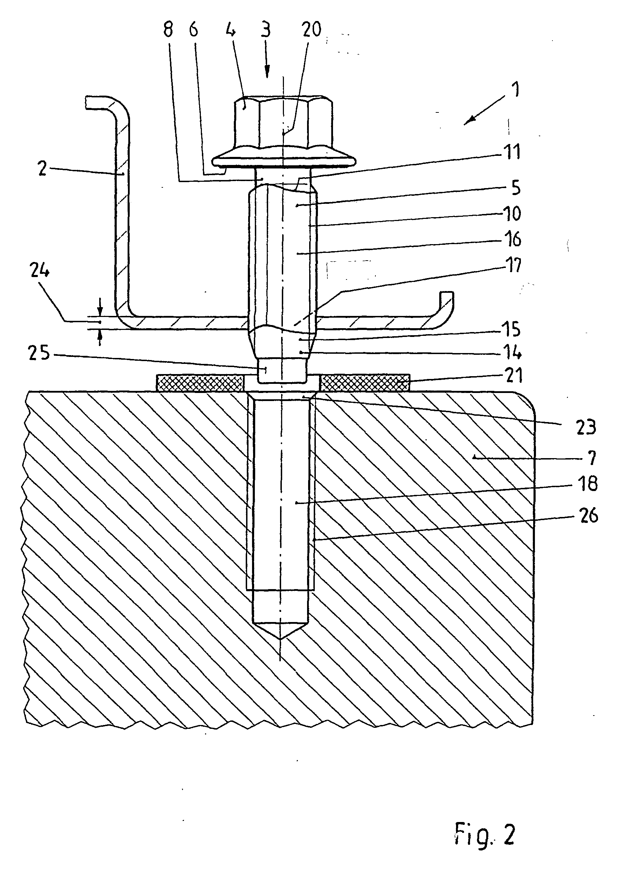

Das in Fig. 2 dargestellte Ausführungsbeispiel stimmt in weiten Bereichen mit dem Ausführungsbeispiel der Fig. 1 überein, weshalb hierauf verwiesen werden kann. Die axiale Länge 24 des Durchgangsloches 17 stimmt mit der Wandstärke des Bauteils 2 überein. Der Schaft 5 der Schraube 3 trägt an seinem freien Ende einen zylindrischen Zentrieransatz 25, der dem erleichterten Einführen in das Durchgangsloch 17 und dem Zentrieren mit Hilfe des Ansatzbereiches 14 dient. Auch bei der Verbindung der Montageeinheit 1 mit dem Werkstück 7 erfüllt der Zentrieransatz 25 diese Funktion nochmals. Die Bohrung 18 im Werkstück 7 ist hier bereits herstellerseits mit einem Gewinde 26 versehen. Wenn das Werkstück 7 mehrere, jeweils mit Gewinden 26 versehene Bohrungen 18 aufweist, nimmt jeder an die Fase 23 anschließende Gewindeeingang einen unterschiedlichen Winkel um die Achse 20 ein. Wenn die Achsen 20 mehrerer Schrauben 3 relativ nahe beieinander an dem Bauteil 2 angeordnet sind und/oder die Wandstärke des Bauteils 2 relativ groß ist, können sich beim gleichzeitigen Überschrauben verschiedener Schrauben 3 Schwierigkeiten ergeben. Diese können in verschiedenen Fällen durch entsprechende Toleranzbemessung ausgeglichen bzw. behoben werden. In Sonderfällen kann es erforderlich sein, das Überschrauben der Schrauben 3 einzeln, also nacheinander, durchzuführen. Diese Schwierigkeiten treten nicht auf, wenn, wie bei dem Ausführungsbeispiel der Fig. 1 dargestellt, die Bohrung 18 zunächst ohne Gewinde hergestellt worden ist und die gewindeformende Eigenschaft der Schrauben 3 beim Überschrauben ein zweites Mal ausgenutzt wird.

Das in Fig. 3 dargestellte Ausführungsbeispiel weist die Besonderheit auf, dass das Gewinde 10 der Schraube 3 an dem Bauteil 2 bei fertig erstellter Montageeinheit 1 in besonderer Weise geschützt untergebracht ist. Die Schraube 3 weist im Bereich ihres Schaftes außer der Ringnut 8, beginnend von dem freien Ende des Schaftes 5, den Ansatzbereich 14 auf. Der Ansatzbereich 14 ist der Bereich des Schaftes 5, der beim Einführen des konischen freien Endes in das ursprünglich im Bauteil 2 gebohrte Durchgangsloch 17 keinen Kontakt mit den Wandungen der Bohrung erhält. Der Ansatzbereich weist damit etwa eine axiale Länge 27 auf. An diesen Ansatzbereich 14 schließt sich der Furchbereich 15 an. Der Furchbereich 15 erstreckt sich etwa über eine axiale Länge 28 am Schaft 5 der Schraube 3. Der Furchbereich 15 wird dadurch bestimmt, dass sich der Außendurchmesser des Gewindes 10 in diesem Bereich verändert, wobei hier der gewindeformende Effekt ausgenutzt wird und das ursprünglich gebohrte Durchgangsloch 17 entsprechend verformt und mit einem Gewinde versehen wird. Der größte Teil der axialen Länge des Schaftes 5 wird jedoch von dem Glättbereich 16 eingenommen, der an den Furchbereich 15 anschließt und sich bis zu der Ringnut 8 erstreckt. Der Glättbereich 16 ist dadurch definiert, dass in ihm der Außendurchmesser 13 des Gewindes 10 konstant ist. Der Glättbereich 16 weist eine wirksame axiale Länge 29 auf bzw. erstreckt sich über diese Länge 29.

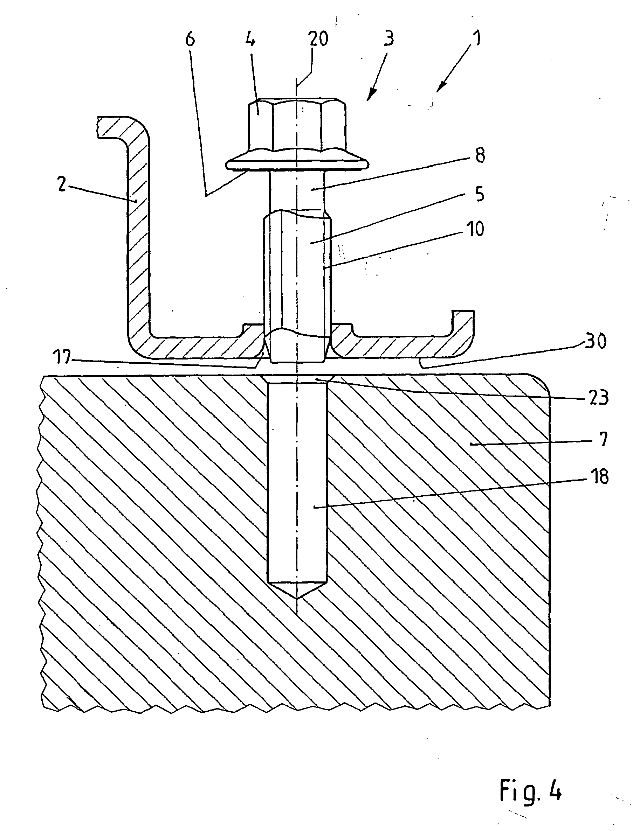

Das Ausführungsbeispiel der Montageeinheit 1 gemäß Fig. 4 stimmt in weiten Bereichen mit vorangehenden Ausführungsformen überein, weshalb hierauf verwiesen werden kann. Das Bauteil 2 weist eine dem Werkstück 7 zugekehrte Anlagefläche 30 auf, die unmittelbar an dem Werkstück 7 zur Anlage kommt. Das Durchgangsloch 17 ist in einem tiefgezogenen Kragen des Bauteils 2 rückversetzt angeordnet. Auch hierbei besteht die Möglichkeit, bei der Herstellung der vormontierten Montageeinheit 1 die gewindeformende Eigenschaft des Furchbereiches 15 nur begrenzt zu nutzen, so dass das freie Ende des Schaftes 5 über die Anlagefläche 30 nicht oder nur wenig übersteht. Das Gewinde 10 am Schaft 5 ist damit geschützt vor Beschädigungen untergebracht.

### BEZUGSZEICHENLISTE

- 1: Montageeinheit
- 2: Bauteil
- 3: Schraube
- 4: Kopf
- 5: Schaft
- 6: Anlagefläche
- 7: Werkstück
- 8: Ringnut
- 9: axiale Länge
- 10: Gewinde
- 11: trilobularer Querschnitt
- 12: Kerndurchmesser
- 13: Außendurchmesser
- 14: Ansatzbereich
- 15: Furchbereich
- 16: Glättbereich
- 17: Durchgangsloch
- 18: Bohrung
- 19: Durchmesser
- 20: Achse
- 21: Dichtung
- 22: Durchbrechung
- 23: Fase
- 24: axiale Länge
- 25: Zentrieransatz
- 26: Gewinde
- 27: axiale Länge
- 28: axiale Länge
- 29: axiale Länge
- 30: Anlagefläche

## Patentansprüche

1. Montageeinheit (1) aus einem Bauteil (2) und mindestens einer gewindeformenden Schraube (3), wobei das Bauteil (2) für jede Schraube (3) je ein Durchgangsloch (17) aufweist und jede Schraube (3) einen der Betätigung dienenden Kopf (4) mit einer dem Bauteil (2) zugekehrten Auflagefläche (6) und einen teilweise mit einem Gewinde (10) versehenen Schaft (5) besitzt, wobei das Durchgangsloch (17) im Bauteil (2) einen Durchmesser aufweist, der größer als der Kerndurchmesser (12) und kleiner als der Außendurchmesser (13) des Gewindes (10) am Schaft (5) der Schraube (3) ausgebildet ist, und die Schraube (3) im Bereich des Schaftes (5) im Anschluss an die Auflagefläche (6) eine einen Hinterschnitt bildende Ringnut (8) aufweist, deren Durchmesser kleiner als der Kerndurchmesser (12) des Gewindes (10) und deren wirksame axiale Länge (9) größer als die axiale Länge (24) des Durchgangslochs (17) im Bauteil (2) ist.

2. Montageeinheit nach Anspruch 1, **dadurch gekennzeichnet, dass** das Gewinde (10) an jeder Schraube (3) auf der dem Kopf (4) abgekehrten Seite einen Ansatzbereich (14) aufweist, in welchem der Außendurchmesser (13) des Gewindes (10) kleiner als der Durchmesser des Durchgangsloches (17) im Bauteil (2) ausgebildet ist.

3. Montageeinheit nach Anspruch 2, **dadurch gekennzeichnet, dass** das Gewinde (10) an jeder Schraube (3) einen Ansatzbereich (14), einen Furchbereich (15) und einen Glättbereich (16) aufweist, wobei die axiale Länge (27+28) des Ansatzbereichs (14) und des Furchbereichs (15) gleich oder kleiner als die axiale Länge (24) des Durchgangsloches (17) im Bauteil (2) ausgebildet ist.

4. Montageeinheit nach Anspruch 2, **dadurch gekennzeichnet, dass** das Gewinde (10) an jeder Schraube (3) einen Ansatzbereich (14), einen Furchbereich (15) und einen Glättbereich (16) aufweist, wobei die axiale Länge (27+28) des Ansatzbereichs (14) und des Furchbereichs (15) größer als die axiale Länge (24) des Durchgangsloches (17) im Bauteil (2) ausgebildet ist.

5. Montageeinheit nach Anspruch 1, **dadurch gekennzeichnet, dass** der Schaft (5) der Schraube (3) im Bereich des Gewindes (10) einen trilobularen Querschnitt aufweist.

6. Montageeinheit nach Anspruch 1, **dadurch gekennzeichnet, dass** das Durchgangsloch (17) im Bauteil (2) einen Durchmesser aufweist, der größer als der Flankendurchmesser und kleiner als 90 % des Außendurchmessers (13) des Gewindes (10) am Schaft (5) der Schraube (3) ausgebildet ist.

7. Montageeinheit nach Anspruch 1, **dadurch gekennzeichnet, dass** das Bauteil (2) für einen Zusammenbau mit einem Werkstück (7) eine Anlagefläche (30) aufweist, und dass das Durchgangsloch (17) im Bauteil (2) gegenüber der Anlagefläche (30) axial rückversetzt angeordnet ist.

8. Montageeinheit nach Anspruch 1, **dadurch gekennzeichnet, dass** die Schraube (3) am freien Ende ihres Schaftes (5) einen gewindefreien Zentrieransatz (25) aufweist.

## Claims

1. An assembly unit (1), comprising: a component (2) and at least one thread moulding screw (3), the component (2) including at least one through hole (17) each for each screw (3) and each screw (3) including a head (4) for actuation, the head having a supporting surface (6) to face the component (2) and a shank (5) at least partly including a thread (10), the through hole (17) in the component (2) having a diameter being more than the core diameter (12) and less than the outer diameter (13) of the thread (10) of the shank (5) of the screw (3), the screw (3) in the region of the shank (5) and close to the supporting surface (6) including an annular channel (8) forming an undercut, the annular channel having a diameter being less than the core diameter (12) of the thread (10) and an effective axial length (9) being more than the axial length (24) of the through hole (17) of the component (2).

2. The assembly unit of claim 1, **characterized in that** the thread (10) at its side facing away from the head (4) of the screw (3) includes a joining portion (14), the outer diameter (13) of the thread (10) in the joining portion (14) being less than the diameter of the through hole (17) of the component (2).

3. The assembly unit of claim 2, **characterized in that** the thread (10) of each screw (3) further includes a joining portion (14), a thread producing portion (15) and a smoothening portion (16), the sum of the axial lengths (27 + 28) of the joining portion (14) and of the thread producing portion (15) being equal or less than the axial length (24) of the through hole (17) of the component (2).

4. The assembly unit of claim 2, **characterized in that** the thread (10) of each screw (3) further includes a joining portion (14), a thread producing portion (15) and a smoothening portion (16), the sum of the axial lengths (27 + 28) of the joining portion (14) and of the thread producing portion (15) being more than the axial length (24) of the through hole (17) of the component (2).

5. The assembly unit of claim 1, **characterized in that** the shank (5) of the screw (3) in the region of the thread (10) has a trilobulare cross section.

6. The assembly unit of claim 1, **characterized in that** the through hole (17) of the component (2) has a diameter being more than the flank diameter and less than 90 percent of the outer diameter (13) of the thread (10) of the screw (3).

7. The assembly unit of claim 1, **characterized in that** the component (2) includes a connection surface (30) being designed and arranged to contact a work piece (7) in the assembled position of the assembly unit, and **in that** the through hole (17) of the component (2) being arranged to be axially displaced with respect to the connecting surface (30).

8. The assembly unit of claim 1, **characterized in that** the screw (3) in the region of the free end of the shank (5) includes a centering portion (25) not including a thread.

## Revendications

1. Unité de montage (1) constituée d'un composant (2) et d'au moins une vis taraudeuse (3), le composant (2) comportant un trou traversant (17) pour chaque vis (3) et chaque vis (3) comportant une tête (4) servant à actionner avec une surface d'appui (6) tournée vers le composant (2) et une tige (5) partiellement munie d'un filet (10), le trou traversant (17) dans le composant (2) présentant un diamètre qui est réalisé de manière à être supérieur au diamètre de noyau (12) et inférieur au diamètre externe (13) du filet (10) sur la tige (5) de la vis (3), la vis (3) présentant, au niveau de la tige (5), à la suite de la surface d'appui (6), une rainure annulaire (8) formant une dépouille, rainure dont le diamètre est inférieur au diamètre de noyau (12) du filet (10) et dont la longueur axiale effective (9) est supérieure à la longueur axiale (24) du trou traversant (17) dans le composant (2).

2. Unité de montage selon la revendication 1, **caractérisée en ce que** le filet (10) comporte, sur chaque vis (3), sur le côté détourné de la tête (4), une zone d'embase (14) dans laquelle le diamètre externe (13) du filet (10) est réalisé de manière à être inférieur au diamètre du trou traversant (17) dans le composant (2).

3. Unité de montage selon la revendication 2, **caractérisée en ce que** le filet (10) comporte, sur chaque vis (3), une zone d'embase (14), une zone cannelée (15) et une zone lisse (16), la longueur axiale (27+28) de la zone d'embase (14) et de la zone cannelée (15) étant réalisée de manière à être égale ou inférieure à la longueur axiale (24) du trou traversant (17) dans le composant (2).

4. Unité de montage selon la revendication 2, **caractérisée en ce que** le filet (10) comporte, sur chaque vis (3), une zone d'embase (14), une zone cannelée (15) et une zone lisse (16), la longueur axiale (27+28) de la zone d'embase (14) et de la zone cannelée (15) étant réalisée de manière à être supérieure à la longueur axiale (24) du trou traversant (17) dans le composant (2).

5. Unité de montage selon la revendication 1, **caractérisée en ce que** la tige (5) de la vis (3) présente une section transversale trilobulaire au niveau du filet (10).

6. Unité de montage selon la revendication 1, **caractérisée en ce que** le trou traversant (17) dans le composant (2) présente un diamètre qui est réalisé de manière à être supérieur au diamètre sur flancs et inférieur à 90 % du diamètre externe (13) du filet (10) sur la tige (5) de la vis (3).

7. Unité de montage selon la revendication 1, **caractérisée en ce que** le composant (2) présente, pour un assemblage à une pièce usinée (7), une surface de contact (30), et **en ce que** le trou traversant (17) dans le composant (2) est disposé avec un décalage arrière dans le sens axial par rapport à la surface de contact (30).

8. Unité de montage selon la revendication 1, **caractérisée en ce que** la vis (3) comporte une embase de centrage sans filet (25) à l'extrémité libre de sa tige (5).
